# EUROPEAN PATENT SPECIFICATION

(11) **EP 2 224 652 B1**
(45) Date of publication and mention of the grant of the patent: **15.02.2012**
(21) Application number: 08867161.5
(22) Date of filing: 26.12.2008
(51) Int. Cl.: H04L 12/58

(54) **METHOD, SYSTEM, SERVER AND TERMINAL FOR CANCELING A PUSH MESSAGE**
VERFAHREN, SYSTEM, SERVER UND ENDGERÄT ZUM ABBRECHEN EINER PUSH-NACHRICHT
PROCÉDÉ, SYSTÈME, SERVEUR ET TERMINAL DESTINÉS À ANNULER UN MESSAGE DE TYPE PUSH

(30) Priority: 27.12.2007 CN 200710307034
(43) Date of publication of application: 01.09.2010
(73) Proprietor: Huawei Technologies Co., Ltd., Longgang District, Shenzhen Guangdong 518129 (CN)
(72) Inventor: ZHANG, Huiping, Longgang District 518129 Shenzhen (CN); CHEN, Guoqiao, Longgang District 518129 Shenzhen (CN); WANG, Lei, Longgang District 518129 Shenzhen (CN); FAN, Shunan, Longgang District 518129 Shenzhen (CN); DONG, Ting, Longgang District 518129 Shenzhen (CN); YANG, Jian, Longgang District 518129 Shenzhen (CN)
(74) Representative: Kreuz, Georg Maria
(86) International application number: PCT/CN2008/073785
(87) International publication number: WO 2009/082972

(56) References cited:
- CN-A- 1 949 770
- CN-A- 101 188 618
- US-A1- 2002 078 250
- US-A1- 2002 087 643
- US-A1- 2004 122 907
- US-B1- 6 178 464
- ANONYMOUS: "PUSH ACCESS PROTOCOL" OMA-WAP-TS-PAP-V2_2-20071002-C,, [Online] no. CANDIDATE VERSION 2.2, 2 October 2007 (2007-10-02), pages 1-50, XP002510801 Retrieved from the Internet: URL:http://www.openmobilealliance.org/tech nical/release_program/docs/Push /V2_2-20071002-C/OMA-WAP-TS-PAP-V2_2-20071 002-C.pdf> [retrieved on 2009-01-16]
- Anonymous: "Cache Operation: WAP-175-CacheOp-20010731-a"[Online] 31 July 2001 (2001-07-31), pages 1-18, XP002607429 WAP forum Retrieved from the Internet: URL:http://www.openmobilealliance.org/tech /affiliates/wap/wap-175-cacheop-20010731-a .pdf> [retrieved on 2010-10-27]

## Description

### FIELD OF THE INVENTION

The present invention relates to the communication field, and in particular, to a method, a system, a server, and a terminal for canceling Push messages.

### BACKGROUND

The Push technology is a content distribution mechanism based on the client/server working mode, in which the server sends information to the client proactively. The Push technology allows a Push Initiator (PI) to push messages and transmit instructions to a Push Proxy Gateway (PPG), and the PPG transmits the messages and instructions to a terminal. Generally, the PPG uses a Push Access Protocol (PAP) to obtain messages from the PI, and sends the content in the messages to a user through a Push-Over The Air (OTA) protocol. The Push technology is generally applied in a message notification system in various industries such as securities, banking, and commercial websites.

The PI is an application that runs in an ordinary web server, and communicates with the PPG through PAP. The PPG is primarily used to transmit a Push message to the terminal, and is also used to identify and authenticate PIs, perform access control, parse Push messages and control signaling and detect their errors, parse the address of the Push message receiver, and perform multicast and broadcast.

The method for canceling Push messages in the prior art aims to prevent the PPG from sending Push messages to a receiver terminal. The prerequisite of this method is that the PPG is not sent any Push message to the receiver terminal. The PI sends a cancel request to the PPG, requesting the PPG to cancel a Push message submitted by the PI previously. The PPG receives the cancel request, and judges whether the Push message is sent to the receiver terminal. If the Push message is sent to the receiver terminal, the PPG sends a response indicating cancellation failure to the PI; if the Push message is not sent to the receiver terminal, the PPG cancel the Push message, and sends an acknowledgement message indicating cancellation success to the PI.

The prior art has this problem: It is impossible to cancel the Push message that is sent to the receiver terminal but is not read by the receiver terminal.

PUSH ACCESS PROTOCOL."OMA-WAP-TS-PAP-V2_2-20071002-C, CANDIDATE VERSION 2.2, 2 October 2007 defines the Push Access Protocol (PAP). The PAP is intended for use in delivering content from Push Initiators to push proxy gateways for subsequent delivery to narrow band devices, including cellular phones and pagers. Example messages include news, stock quotes, weather, traffic reports, and notification of events such as email arrival. With push functionality, users are able to get information without having to request that information. In many cases it is important for the user to get the information as soon as it is available.

US 2004/122907 Al discloses a controlling interaction between an enterprise application and a mobile client device in a communication system. Push content is generated in a wireless secure server or other type of server, responsive to information received in the wireless secure server from the enterprise application. The push content is deliverable from the wireless secure server to the mobile client device over a wireless network. The wireless secure server receives from the mobile client device, responsive to the push content, a request for additional information identifiable at least in part by the push content. The additional information is deliverable from the server to the mobile client device over the wireless network.

### SUMMARY

The present invention aims to cancel a Push message that is sent to a receiver terminal.

As a first aspect of the present invention a method for canceling a Push message includes:
by a first receiver terminal ,receiving a cancel request that carries a Push identifier (ID) after a Push message is sent; and
by the first receiver terminal ,canceling the Push message according to the cancel request;
wherein the cancel request is a report message; and
before receiving the cancel request, the method further comprises:
   by a server, receiving the report message sent by a second receiver terminal, wherein the report message indicates that the Push message is read.

As a second aspect of the present invention a server includes:
a first judging module, adapted to judge whether a Push message is sent to a first receiver terminal; and
a sending module, adapted to send a cancel request that carries a Push ID to the first receiver terminal if the Push message is sent to the first receiver terminal;
a first receiving module, adapted to receive the cancel request sent by a sender terminal, or receive a report message sent by a second receiver terminal, wherein the report message indicates that the Push message is read.

As a third aspect of the present invention a terminal includes:
a receiving module, adapted to receive a cancel request that carries a Push ID after a Push message is sent; and
a canceling module, adapted to cancel the Push message according to the cancel request;
a first judging module, adapted to judge whether the Push message is received according to the Push ID;
a deleting module, adapted to delete the Push message if the first judging module determines that the Push message is received;
a preventing module, adapted to prevent receiving the Push message if the first judging module determines that the Push message is not received; and
a sending module, adapted to return a response indicating cancellation success to a server.

As a fourth aspect of the present invention a system for canceling a Push message includes:
a server, adapted to send a cancel request that carries a Push ID to a first receiver terminal if determining that the Push message is sent to the first receiver terminal; and
a first receiver terminal, adapted to receive the cancel request that carries the Push ID after the Push message is sent; and cancel the Push message according to the cancel request;
a sender terminal, adapted to send the cancel request for canceling the Push message to the server or a second receiver terminal, adapted to send a report message to the server, wherein the report message indicates that the Push message is read.

In the present invention, a cancel request that carries a Push ID is received after a Push message is sent; and the Push message is cancelled according to the cancel request. In this way, the Push message sent to the receiver terminal is cancelled.

### BRIEF DESCRIPTION OF THE DRAWINGS

FIG. 1 is a flowchart of a method for canceling a Push message in the first embodiment of the present invention;
FIG. 2 is a flowchart of a method for canceling a Push message in the second embodiment of the present invention;
FIG. 3 is a flowchart of a method for canceling a Push message in the third embodiment of the present invention;
FIG. 4 is a schematic diagram of a server in an embodiment of the present invention;
FIG. 5 is a schematic diagram of a terminal in an embodiment of the present invention; and
FIG. 6 is a schematic diagram of a system for canceling a Push message in an embodiment of the present invention.

### DETAILED DESCRIPTION OF THE EMBODIMENTS

The technical solution under the present invention is elaborated below with reference to the accompanying drawings and exemplary embodiments.

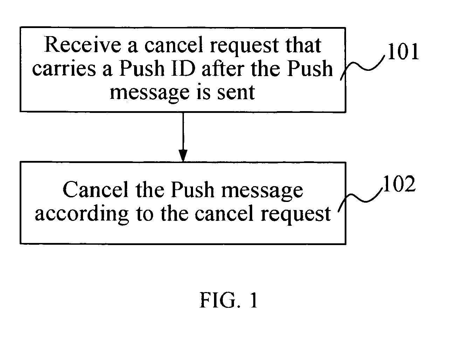

FIG. 1 is a flowchart of a method for canceling a Push message in the first embodiment of the present invention. The method includes the following steps:
Step 101: Receive a cancel request that carries a Push ID after a Push message is sent.
Step 102: Cancel the Push message according to the cancel request.

In this embodiment, a cancel request that carries a Push ID is received after a Push message is sent; and the Push message is cancelled according to the cancel request. In this way, the Push message sent to the receiver terminal is cancelled.

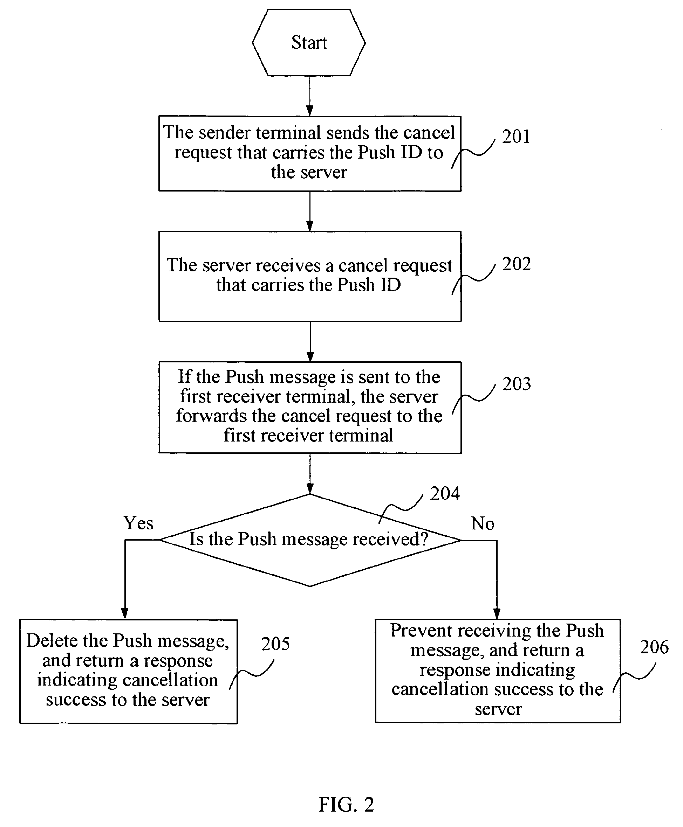

FIG. 2 is a flowchart of a method for canceling a Push message in the second embodiment of the present invention. This embodiment describes the technical solution under the present invention in more detail, assuming that the Push message is cancelled in a Session Initiation Protocol (SIP)-Push service. Before the steps of this embodiment are performed, the server sends a Push message to the first receiver terminal through a notification message; after receiving the Push message, the first receiver terminal sends a state report to the server, indicating that the Push message is received.

This embodiment includes the following steps:
Step 201: The sender terminal sends a cancel request that carries a Push ID to the server.
   In the Push technology, each Push message corresponds to a Push ID for identifying the Push message. The content of the cancel request may include: an ID of the terminal that sends the Push message (in this embodiment, another network element), an ID of the terminal that receives the Push message (in this embodiment, the first receiver terminal), and a Push ID.
Step 202: The server receives a cancel request that carries the Push ID.
Step 203: If the Push message is sent to the first receiver terminal, the server forwards the cancel request to the first receiver terminal.
Step 204: The first receiver terminal receives the cancel request, obtains the Push ID from the cancel request, and judges whether the Push message is received locally according to the Push ID. If the Push message is received locally, the first receiver terminal performs step 205; if the Push message is not received locally, the first receiver terminal performs step 206.
Step 205: The first receiver terminal deletes the Push message, and returns a response indicating cancellation success to the server.
Step 206: The first receiver terminal prevents receiving the Push message, and returns a response indicating cancellation success to the server.

Specifically, step 201 and step 202 may be: The server generates the cancel request that carries the Push ID by itself.

In the foregoing steps, the cancel request and the response may be carried in one of these message bodies such as: Push OTA-SIP, Push OTA-Hypertext Transfer Protocol (HTTP), and Push OTA-Wireless Session Protocol (WSP). In the connection-oriented Push OTA-WSP, the operation of canceling the Push message may be performed through an operation primitive "Po-ConfirmedPush".

In this embodiment, if the server sends the Push message but the first receiver terminal does not receive it, the server prevents the first receiver terminal from receiving the Push message; if the first receiver terminal receives the Push message but does not read it, the server deletes the Push message. In this way, the Push message is sent to the receiver terminal but is not read by the receiver terminal can be cancelled.

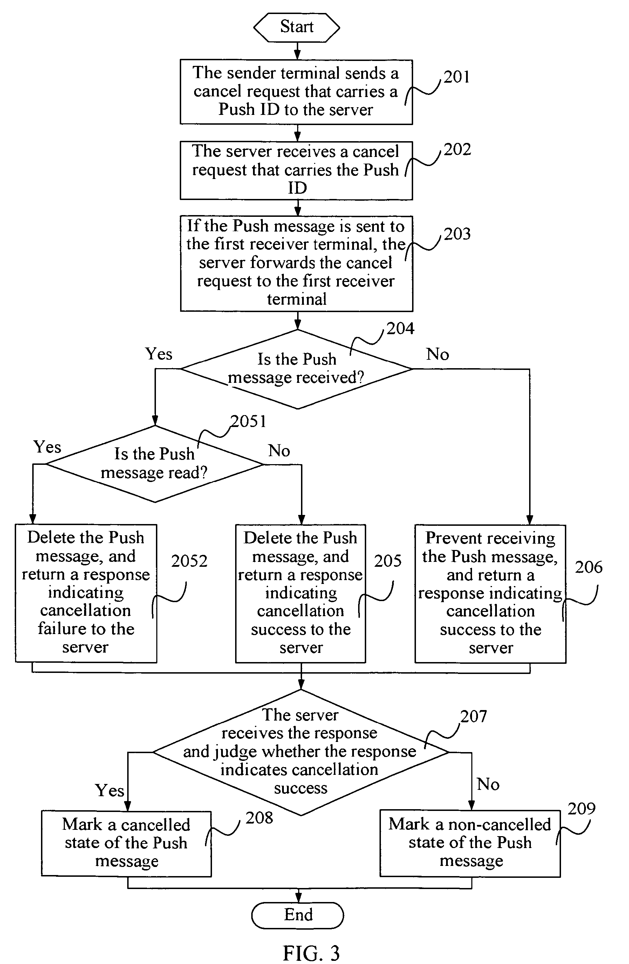

FIG. 3 is a flowchart of a method for canceling a Push message in the third embodiment of the present invention. This embodiment differs from the second embodiment in the following aspects:
Before step 205, this embodiment further includes:
   Step 2051: Judge whether the Push message is read. If the Push message is read, delete the Push message, and return a response indicating cancellation failure to the server (step 2052); if the Push message is not read, perform step 205.

After step 206, this embodiment further includes:
Step 207: The server receives a response, and judges whether the response indicates cancellation success. If the response indicates cancellation success, the server performs step 208; if the response indicates cancellation failure, the server performs step 209.
Step 208: Mark a cancelled state of the Push message.
Step 209: Mark a non-cancelled state of the Push message.

In this embodiment, if the server sends the Push message but the first receiver terminal does not receive it, the server prevents the first receiver terminal from receiving the Push message; if the first receiver terminal receives the Push message but does not read it, the server deletes the Push message. In this way, the Push message is sent to the receiver terminal but not read by the receiver terminal can be cancelled.

In the first embodiment, the second embodiment, and the third embodiment above, only a single terminal exists. In a 3G mobile network, a user may hold more than one terminal; this user is identified by a public identifier, and multiple terminals of the user are identified by actual physical addresses. The multiple terminals may be 2G mobile phones, 3G mobile phones, or computers. When the server sends a message to the user, the multiple terminals of the user receive the message simultaneously.

In the method for canceling a Push message in fourth embodiment, the first receiver terminal and the second receiver terminal are two terminals of the same user. The first receiver terminal and/or the second receiver terminal send a registration request to the SIP/IP core network. The registration request carries a SIP Universal Resource Identifier (URI). In this way, the actual physical address of the first receiver terminal and/or the second receiver terminal is provided. The actual physical address is registered on the SIP/IP core network to implement routing of messages and signaling. Further, the SIP/IP core network may transmit registration information to the server.

This embodiment differs from the second embodiment in that: The cancel request is a report message; step 201 is that the second receiver terminal reads the Push message, and sends a report message to the server, indicating that the second terminal reads the Push message; and step 202 is that the server receives the report message.

In this embodiment, a report message is received, the report message indicates that the second receiver terminal reads the Push message, and then a cancel request is sent to the first receiver terminal to cancel the Push message; and the Push message is cancelled on the precondition that the first receiver terminal does not read the Push message. If one user holds multiple terminals, after one of the terminals reads the Push message, the Push message is sent to other terminals but not read by other terminals is cancelled automatically, and therefore, information pileup is avoided and resources are saved.

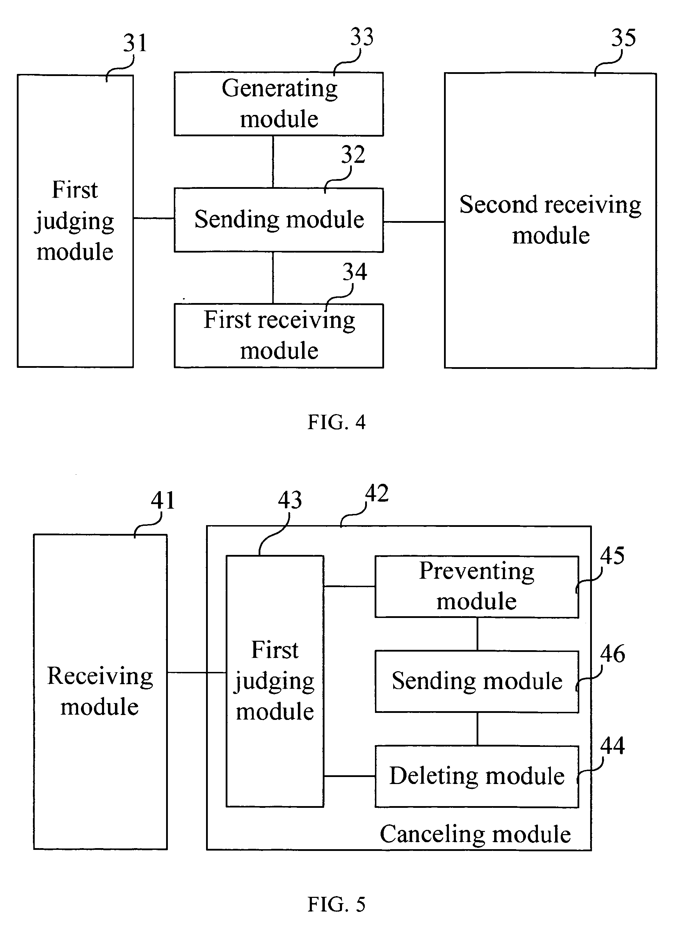

FIG. 4 is a schematic diagram of a server in an embodiment of the present invention. The server includes:
a first judging module 31, adapted to judge whether a Push message is sent to a first receiver terminal; and
a sending module 32, adapted to send a cancel request that carries a Push ID to the first receiver terminal if the Push message is sent to the first receiver terminal.

The server in this embodiment may further include:
a generating module 33, adapted to generate a cancel request that carries a Push ID; and/or
a first receiving module 34, adapted to receive the cancel request sent by the sender terminal, or receive a report message sent by a second receiver terminal, where the report message indicates that the Push message is read.

The server in this embodiment may further include: a second receiving module 35, adapted to receive a response returned by the first receiver terminal.

The response received by the second receiving module 35 is obtained according to the cancel request sent by the sending module 32. Therefore, the sending module 32 and the second receiver module 35 can communicate with each other.

In this embodiment, the first judging module 31 judges whether the Push message is sent. If the Push message is sent, the sending module 32 sends the cancel request generated by the generating module 33 or the cancel request received by the first receiving module 34 to the first receiver terminal. After a response is received, the first judging module 31 judges whether the cancellation succeeds, and marks the cancellation stated.

FIG. 5 is a schematic diagram of a terminal in an embodiment of the present invention. The terminal includes:
a receiving module 41, adapted to receive a cancel request that carries a Push ID after a Push message is sent; and
a canceling module 42, adapted to cancel the Push message according to the cancel request.

The canceling module 42 may include:
a first judging module 43, adapted to judge whether the Push message is received according to the Push ID;
a deleting module 44, adapted to delete the Push message if the first judging module 43 determines that the Push message is received;
a preventing module 45, adapted to prevent receiving the Push message if the first judging module 43 determines that the Push message is not received; and
a sending module 46, adapted to return a response indicating cancellation success to the server.

In this embodiment, the receiver receives the request for canceling the Push message through the receiving module 41. If the terminal does not receive the Push message, the preventing module 45 prevents the terminal from receiving the Push message; if the terminal receives the Push message but does not read it, the deleting module 44 deletes the Push message. In this way, the Push message is sent to the terminal but not read by the terminal can be cancelled.

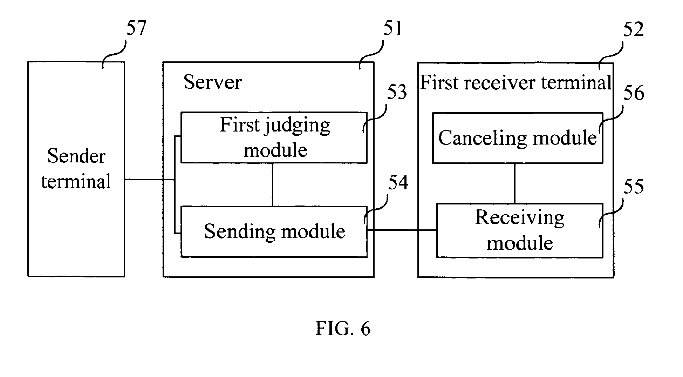

FIG. 6 is a schematic diagram of a system for canceling a Push message in an embodiment of the present invention. The system includes:
a server 51, adapted to send a cancel request that carries a Push ID to a first receiver terminal 52 if determining that the Push message is sent to the first receiver terminal 52; and
a first receiver terminal 52, adapted to receive the cancel request that carries the Push ID after the Push message is sent; and cancel the Push message according to the cancel request.

The server 51 may include:
a first judging module 53, adapted to judge whether a Push message is sent to a first receiver terminal 52; and
a sending module 54, adapted to send a cancel request that carries a Push ID to the first receiver terminal 52 if the Push message is sent to the first receiver terminal 52.

The first receiver terminal 52 may include:
a receiving module 55, adapted to receive a cancel request that carries a Push ID; and
a canceling module 56, adapted to cancel the Push message according to the cancel request.

The system in this embodiment may include a sender terminal 57, which is adapted to send a cancel request for canceling a Push message to the server 51; and/or a second receiver terminal, which is adapted to send a report message to the server 51, where the report message indicates that the Push message is read. According to this report message, the server 51 sends a cancel request to the first receiver terminal 52 through a sending module 54, and therefore, the Push message is cancelled in the case that the second receiver terminal reads the Push message and the Push message is sent to the first receiver terminal but the first receiver terminal does not read the Push message. In this way, if one user holds multiple terminals, after one of the terminals reads the Push message, the Push message unread on other terminals is cancelled automatically, and therefore, information pileup is avoided and resources are saved.

The system for canceling a Push message in an embodiment of the present invention may include any of the terminals mentioned in the foregoing embodiments, and any of the servers mentioned in the foregoing embodiments.

In this embodiment, a server 51 sends a request for canceling a Push message to the first receiver terminal 52; if the server 51 is sent the Push message, the canceling module 56 cancels the Push message. In this way, the Push message sent to the receiver terminal can be cancelled.

Finally, it should be noted that the above embodiments are merely provided for describing the technical solutions of the present invention, but not intended to limit the present invention. It is apparent that persons skilled in the art can make various modifications and variations to the invention.

## Claims

1. A method for canceling a Push message, comprising:
by a first receiver terminal ,receiving (101; 204) a cancel request that carries a Push identifier, ID, after the Push message is sent; and
by the first receiver terminal, canceling (102; 205, 206) the Push message according to the cancel request;
wherein the cancel request is a report message; and
before receiving the cancel request, the method further comprises:
by a server, receiving the report message sent by a second receiver terminal, wherein the report message indicates that the Push message is read.

2. The method for canceling a Push message according to claim 1, wherein before the receiving the cancel request, the method further comprises:
by a server, generating the cancel request that carries the Push ID.

3. The method for canceling a Push message according to claim 1, wherein before the receiving the cancel request, the method further comprises:
by a sender terminal, sending the cancel request to a server.

4. The method for canceling a Push message according to any one of claims 1-3, wherein the canceling the Push message comprises:
judging (204) whether the Push message is received according to the Push ID; if the Push message is received, deleting (205) the Push message; if the Push message is not received, preventing (206) receiving the Push message; and
returning a response indicating cancellation success to the server.

5. The method for canceling a Push message according to any one of claims 1-3, wherein the canceling the Push message comprises:
judging (204) whether the Push message is received according to the Push ID;
if the Push message is received, judging (2051) whether the Push message is read; if the Push message is read, deleting (2052) the Push message and sending a response indicating cancellation failure to the server; if the Push message is not read, deleting (205) the Push message and returning a response indicating cancellation success to the server; and
if the Push message is not received, preventing (206) receiving the Push message, and returning the response indicating cancellation success to the server.

6. The method for canceling a Push message according to claim 5, wherein after the returning the response to the server, the method further comprises:
by the server, judging (207) whether the response indicates cancellation success; if the response indicates cancellation success, marking (208) a cancelled state of the Push message; if the response indicates cancellation failure, marking (209) a non-cancelled state of the Push message.

7. A server, comprising:
a first judging module (31) , adapted to judge whether a Push message is sent to a first receiver terminal; and
a sending module (32) , adapted to send a cancel request that carries a Push identifier, ID, to the first receiver terminal if the Push message is sent to the first receiver terminal;
a first receiving module (34) , adapted to receive the cancel request sent by a sender terminal, or receive a report message sent by a second receiver terminal, wherein the report message indicates that the Push message is read.

8. The server of claim 7, further comprising:
a generating module (33) , adapted to generate the cancel request that carries the Push ID.

9. The server according to any one of claims 7-8, further comprising:
a second receiving module (35) , adapted to receive a response returned by the first receiver terminal.

10. A terminal, comprising:
a receiving module (41), adapted to receive a cancel request that carries a Push identifier, ID, after a Push message is sent; and
a canceling module (42), adapted to cancel the Push message according to the cancel request;
a first judging module (43), adapted to judge whether the Push message is received according to the Push ID;
a deleting module (44), adapted to delete the Push message if the first judging module determines that the Push message is received;
a preventing module (45), adapted to prevent receiving the Push message if the first judging module determines that the Push message is not received; and
a sending module (46), adapted to return a response indicating cancellation success to a server.

11. A system for canceling a Push message, comprising:
a server (51), adapted to send a cancel request that carries a Push identifier, ID, to a first receiver terminal (52) if determining that the Push message is sent to the first receiver terminal; and
the first receiver terminal (52), adapted to receive the cancel request that carries the Push ID after the Push message is sent; and cancel the Push message according to the cancel request;
a second receiver terminal, adapted to send a report message to the server, wherein the report message indicates that the Push message is read.

## Patentansprüche

1. Verfahren zum Annullieren einer Push-Nachricht, das Folgendes umfasst:
durch ein erstes Empfängerendgerät Empfangen (101; 204) einer Annullierungsanforderung, die einen Push-Identifizierer ID führt, nachdem die Push-Nachricht gesendet worden ist; und
durch das erste Empfängerendgerät Annullieren (102; 205, 206) der Push-Nachricht in Übereinstimmung mit der Annullierungsanforderung;
wobei die Annullierungsanforderung eine Meldenachricht ist; und
wobei vor dem Empfangen der Annullierungsanforderung das Verfahren ferner Folgendes umfasst:
durch einen Server Empfangen der durch ein zweites Empfängerendgerät gesendeten Meldenachricht, wobei die Meldenachricht angibt, dass die Push-Nachricht gelesen worden ist.

2. Verfahren zum Annullieren einer Push-Nachricht nach Anspruch 1, wobei vor dem Empfangen der Annullierungsanforderung das Verfahren ferner Folgendes umfasst:
durch einen Server Erzeugen der Annullierungsanforderung, die die Push-ID führt.

3. Verfahren zum Annullieren einer Push-Nachricht nach Anspruch 1, wobei vor dem Empfangen der Annullierungsanforderung das Verfahren ferner Folgendes umfasst:
durch ein Senderendgerät Senden der Annullierungsanforderung an einen Server.

4. Verfahren zum Annullieren einer Push-Nachricht nach einem der Ansprüche 1-3, wobei das Annullieren der Push-Nachricht Folgendes umfasst:
Beurteilen (204), ob die Push-Nachricht empfangen worden ist, in Übereinstimmung mit der Push-ID; falls die Push-Nachricht empfangen worden ist, Löschen (205) der Push-Nachricht; falls die Push-Nachricht nicht empfangen worden ist, Verhindern (206) des Empfangens der Push-Nachricht; und
Zurückschicken einer Antwort, die den Annullierungserfolg angibt, an den Server.

5. Verfahren zum Annullieren einer Push-Nachricht nach einem der Ansprüche 1-3, wobei das Annullieren der Push-Nachricht Folgendes umfasst:
Beurteilen (204), ob die Push-Nachricht empfangen worden ist, in Übereinstimmung mit der Push-ID;
falls die Push-Nachricht empfangen worden ist, Beurteilen (2051), ob die Push-Nachricht gelesen worden ist; falls die Push-Nachricht gelesen worden ist, Löschen (2052) der Push-Nachricht und Senden einer Antwort, die den Annullierungsmisserfolg angibt, an den Server; falls die Push-Nachricht nicht gelesen worden ist, Löschen (205) der Push-Nachricht und Zurückschicken einer Antwort, die den Annullierungserfolg angibt, an den Server; und
falls die Push-Nachricht nicht empfangen worden ist, Verhindern (206) des Empfangens der Push-Nachricht und Zurückschicken der Antwort, die den Annullierungserfolg angibt, an den Server.

6. Verfahren zum Annullieren einer Push-Nachricht nach Anspruch 5, wobei nach dem Zurückschicken der Antwort an den Server das Verfahren ferner Folgendes umfasst:
durch den Server Beurteilen (207), ob die Antwort den Annullierungserfolg angibt; falls die Antwort den Annullierungserfolg angibt, Markieren (208) eines Annullierungszustandes der Push-Nachricht; falls die Antwort den Annullierungsmisserfolg angibt, Markieren (209) eines Nichtannullierungszustandes der Push-Nachricht.

7. Server, der Folgendes umfasst:
ein erstes Beurteilungsmodul (31), das dazu ausgelegt ist, um zu beurteilen, ob eine Push-Nachricht an ein erstes Empfängerendgerät gesendet worden ist; und
ein Sendemodul (32), das dazu ausgelegt ist, um eine Annullierungsanforderung, die einen Push-Identifizierer ID führt, an das erste Empfängerendgerät zu senden, falls die Push-Nachricht an das erste Empfängerendgerät gesendet worden ist;
ein erstes Empfangsmodul (34), das dazu ausgelegt ist, um die durch ein Senderendgerät gesendete Annullierungsanforderung zu empfangen oder um eine durch ein zweites Empfängerendgerät gesendete Meldenachricht zu empfangen, wobei die Meldenachricht angibt, dass die Push-Nachricht gelesen worden ist.

8. Server nach Anspruch 7, der ferner Folgendes umfasst:
ein Erzeugungsmodul (33), das dazu ausgelegt ist, um die Annullierungsanforderung zu erzeugen, die die Push-ID führt.

9. Server nach einem der Ansprüche 7-8, der ferner Folgendes umfasst:
ein zweites Empfangsmodul (35), das dazu ausgelegt ist, um eine durch das erste Empfängerendgerät zurückgeschickte Antwort zu empfangen.

10. Endgerät, das Folgendes umfasst:
ein Empfangsmodul (41), das dazu ausgelegt ist, um eine Annullierungsanforderung, die einen Push-Identifizierer ID führt, zu empfangen, nachdem eine Push-Nachricht gesendet worden ist; und
ein Annullierungsmodul (42), das dazu ausgelegt ist, um die Push-Nachricht in Übereinstimmung mit der Annullierungsanforderung zu annullieren;
ein erstes Beurteilungsmodul (43), das dazu ausgelegt ist, um in Übereinstimmung mit der Push-ID zu beurteilen, ob die Push-Nachricht empfangen worden ist;
ein Löschmodul (44), das dazu ausgelegt ist, um die Push-Nachricht zu löschen, falls das erste Beurteilungsmodul bestimmt, dass die Push-Nachricht empfangen worden ist;
ein Verhinderungsmodul (45), das dazu ausgelegt ist, um das Empfangen der Push-Nachricht zu verhindern, falls das erste Beurteilungsmodul bestimmt, dass die Push-Nachricht nicht empfangen worden ist; und
ein Sendemodul (46), das dazu ausgelegt ist, um eine Antwort, die den Annullierungserfolg angibt, an einen Server zurückzuschicken.

11. System zum Annullieren einer Push-Nachricht, das Folgendes umfasst:
einen Server (51), der dazu ausgelegt ist, um eine Annullierungsanforderung, die einen Push-Identifizierer ID führt, an ein erstes Empfängerendgerät (52) zu senden, falls bestimmt wird, dass die Push-Nachricht an das erste Empfängerendgerät gesendet worden ist; und
das erste Empfängerendgerät (52), das dazu ausgelegt ist, um die Annullierungsanforderung, die die Push-ID führt, zu empfangen, nachdem die Push-Nachricht gesendet worden ist; und um die Push-Nachricht in Übereinstimmung mit der Annullierungsanforderung zu annullieren;
ein zweites Empfängerendgerät, das dazu ausgelegt ist, um eine Meldenachricht an den Server zu senden, wobei die Meldenachricht angibt, dass die Push-Nachricht gelesen worden ist.

## Revendications

1. Procédé d'annulation d'un message Push, comprenant :
par un premier terminal récepteur, la réception (101 ; 204) d'une requête d'annulation qui porte un identifiant, ID, Push, après l'envoi du message Push ; et
par le premier terminal récepteur, l'annulation (102 ; 205, 206) du message Push en fonction de la requête d'annulation ;
dans lequel la requête d'annulation est un message de rapport ; et
le procédé comprenant en outre, avant la réception de la requête d'annulation :
par un serveur, la réception du message de rapport envoyé par un second terminal récepteur, le message de rapport indiquant que le message Push est lu.

2. Procédé d'annulation d'un message Push selon la revendication 1, comprenant en outre avant la réception de la requête d'annulation :
par un serveur, la génération de la requête d'annulation qui porte l'ID Push.

3. Procédé d'annulation d'un message Push selon la revendication 1, comprenant en outre avant la réception de la requête d'annulation :
par un terminal expéditeur, l'envoi de la requête d'annulation à un serveur.

4. Procédé d'annulation d'un message Push selon l'une quelconque des revendications 1 à 3, dans lequel l'annulation du message Push comprend :
l'évaluation (204) si le message Push est reçu ou non en fonction de l'ID Push ; si le message Push est reçu, la suppression (205) du message Push ; si le message Push n'est pas reçu, le barrage (206) de la réception du message Push ; et
le renvoi d'une réponse indiquant la réussite de l'annulation au serveur.

5. Procédé d'annulation d'un message Push selon l'une quelconque des revendications 1 à 3, dans lequel l'annulation du message Push comprend :
l'évaluation (204) si le message Push est reçu ou non en fonction de l'ID Push ;
si le message Push est reçu, l'évaluation (2051) si le message Push est lu ou non ; si le message Push est lu, la suppression (2052) du message Push et l'envoi d'une réponse indiquant l'échec de l'annulation au serveur ; si le message Push n'est pas lu, la suppression (205) du message Push et le renvoi au serveur d'une réponse indiquant la réussite de l'annulation ; et
si le message Push n'est pas reçu, le barrage (206) de la réception du message Push,
et le renvoi au serveur d'une réponse indiquant la réussite de l'annulation.

6. Procédé d'annulation d'un message Push selon la revendication 5, comprenant en outre après le renvoi de la réponse au serveur :
l'évaluation (207) par le serveur si la réponse indique ou non une réussite de l'annulation, si la réponse indique une réussite de l'annulation, le marquage (208) d'un état annulé du message Push ; si la réponse indique un échec de l'annulation, le marquage (209) d'un état non annulé du message Push.

7. Serveur, comprenant :
un premier module d'évaluation (31), adapté pour évaluer si un message Push est envoyé ou non à un premier terminal récepteur ; et
un module d'envoi (32), adapté pour envoyer une requête d'annulation portant un identifiant, ID, Push, au premier terminal récepteur si le message Push est envoyé au premier terminal récepteur ;
un premier module de réception (34), adapté pour recevoir la requête d'annulation envoyée par un terminal expéditeur, ou recevoir un message de rapport envoyé par un second terminal récepteur, le message de rapport indiquant que le message Push est lu.

8. Serveur selon la revendication 7, comprenant en outre :
un module de génération (33), adapté pour générer la requête d'annulation qui porte l'ID Push.

9. Serveur selon l'une quelconque des revendications 7 - 8, comprenant en outre :
un second module de réception (35), adapté pour recevoir une réponse renvoyée par le premier terminal récepteur.

10. Terminal, comprenant :
un module de réception (41), adapté pour recevoir une requête d'annulation qui porte un identifiant, In, Push, après l'envoi d'un message Push ; et
un module d'annulation (42), adapté pour annuler le message Push en fonction de la requête d'annulation ;
un premier module d'évaluation (43), adapté pour évaluer si le message Push est reçu ou non en fonction de l'ID Push ;
un module de suppression (44), adapté pour supprimer le message Push si le premier module d'évaluation détermine que le message Push est reçu ;
un module de barrage (45), adapté pour barrer la réception du message Push si le premier module d'évaluation détermine que le message Push n'est pas reçu ; et
un module d'envoi (46), adapté pour renvoyer à un serveur une réponse indiquant une réussite de l'annulation.

11. Système d'annulation d'un message Push, comprenant :
un serveur (51), adapté pour envoyer une requête d'annulation qui porte un identifiant, ID, Push, à un premier terminal récepteur (52) s'il est déterminé que le message Push est envoyé au premier terminal récepteur ; et
le premier terminal récepteur (52), adapté pour recevoir la requête d'annulation qui porte l'ID Push après l'envoi du message Push ; et supprimer le message Push en fonction de la requête d'annulation ;
un second terminal récepteur, adapté pour envoyer au serveur un message de rapport, le message de rapport indiquant que le message Push est lu.
